(19) Europäisches Patentamt / European Patent Office / Office européen des brevets

(11) **EP 3 293 697 A1**

(12) **EUROPEAN PATENT APPLICATION**
published in accordance with Art. 153(4) EPC

(43) Date of publication:
**14.03.2018 Bulletin 2018/11**

(51) Int Cl.:
*G06T 5/00* (2006.01)     *H04N 1/407* (2006.01)
*H04N 5/232* (2006.01)

(21) Application number: **16789462.5**

(22) Date of filing: **14.01.2016**

(86) International application number:
**PCT/JP2016/051028**

(87) International publication number:
**WO 2016/178326 (10.11.2016 Gazette 2016/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.05.2015   JP 2015094902**

(71) Applicant: **OLYMPUS CORPORATION**
**Hachioji-shi**
**Tokyo 192-8507 (JP)**

(72) Inventor: **SUZUKI, Hiroshi**
**Tokyo 192-8507 (JP)**

(74) Representative: **Gunzelmann, Rainer**
**Wuesthoff & Wuesthoff**
**Patentanwälte PartG mbB**
**Schweigerstraße 2**
**81541 München (DE)**

(54) **IMAGE PROCESSING DEVICE, IMAGING DEVICE, IMAGE PROCESSING METHOD, AND STORAGE MEDIUM STORING IMAGE PROCESSING PROGRAM FOR IMAGE PROCESSING DEVICE**

(57)     An image processing apparatus includes a deterioration degree detector (200) which detects a deterioration degree of each pixel of image data, a deterioration degree change determination unit (201) which determines a degree of a change of the deterioration degree in a predetermined region including a reference pixel and a neighboring pixel therearound in the image data on the basis of the deterioration degree, a correction value setting unit (202) which sets a correction value to correct a deterioration of the reference pixel on the basis of the degree of the change of the deterioration degree, and a correction processor (203) which corrects data regarding the reference pixel on the basis of at least the correction value.

F I G. 2

# Description

Technical Field

The present invention relates to an image processing apparatus, an imaging apparatus, an image processing method, and a storage medium storing an image processing program of an image processing apparatus which correct an image where image quality of contrast, colors or the like is impaired due to an influence of, e. g., haze, mist or fog.

Background Art

Image quality of contrast, colors or the like of an image is impaired due to an influence of haze, mist, fog or the like produced in the atmosphere in some cases. For example, there is a case where a landscape photograph of a distant mountain or the like is taken outdoors. When the distant mountain is misty in this photography, the quality of an image obtained in this situation is impaired. In this case, visibility of the distant mountain is lowered.

As a technology to solve such a problem, there is, for example, a technology in, for example, Japanese Patent No. 4982475. Japanese Patent No. 4982475 discloses calculating a maximum and a minimum of luminance for each local region of an image, and performing an adaptive contrast correction so that the difference between the maximum and the minimum increases. Japanese Patent No. 4982475 enables a satisfactory contrast correction to be performed even in an image in which a region having no mist and a region having mist are mixed.

Summary of Invention

Japanese Patent No. 4982475 decides a contrast correction coefficient for a target pixel on the basis of a luminance distribution for each local region. In this correction of contrast, for example, stretching or equalization of a histogram of luminance is used. When both a misty region and a non-misty region are mixed in the local region at the time of the contrast correction, luminance information regarding both the regions is included in the luminance distribution for each local region. It is therefore difficult to perform an expected contrast correction by simple histogram stretching or equalization. Specifically, there is a possibility of reduced effect of the correction at the boundary between both the regions, or occurrence of luminance unevenness after the correction.

The present invention has been made in view of the above circumstances, and is intended to provide an image processing apparatus, an imaging apparatus, an image processing method, and a storage medium storing an image processing program of an image processing apparatus which enable a suitable contrast correction for each local region.

An image processing apparatus according to a first aspect of the invention comprises: a deterioration degree detector which detects a deterioration degree of each pixel of image data; a deterioration degree change determination unit which determines a degree of a change of the deterioration degree in a predetermined region including a reference pixel and a neighboring pixel therearound in the image data on the basis of the deterioration degree; a correction value setting unit which sets a correction value to correct a deterioration of the reference pixel on the basis of the degree of the change of the deterioration degree; and a correction processor which corrects data regarding the reference pixel on the basis of at least the correction value.

An imaging apparatus according to a second aspect of the invention comprises: the image processing apparatus according to the first aspect; and an imaging unit which acquires the image data.

An image processing method according to a third aspect of the invention comprises: detecting a deterioration degree of each pixel of image data; determining the degree of a change of the deterioration degree in a predetermined region including a reference pixel and a neighboring pixel therearound in the image data on the basis of the deterioration degree; setting a correction value to correct the deterioration of the reference pixel on the basis of the degree of the change of the deterioration degree; and correcting data regarding the reference pixel on the basis of the correction value.

A storage medium according to a forth aspect of the invention, stores an image processing program of an image processing apparatus which causes a computer to: detect a deterioration degree of each pixel of image data; determine the degree of a change of the deterioration degree in a predetermined region including a reference pixel and a neighboring pixel therearound in the image data on the basis of the deterioration degree; set a correction value to correct the deterioration of the reference pixel on the basis of the degree of the change of the deterioration degree; and correct data regarding the reference pixel on the basis of the correction value.

The present invention is to provide an image processing apparatus, an imaging apparatus, an image processing method, and a storage medium storing an image processing program of an image processing apparatus which enable a suitable contrast correction for each local region.

Brief Description of Drawings

FIG. 1 is an overall configuration diagram showing a first embodiment of an imaging apparatus comprising an image processing apparatus according to the present invention;
FIG. 2 is a specific block configuration diagram showing a mist correction unit;

FIG. 3A is a schematic diagram illustrating a technique to estimate a mist component H (x, y) of each pixel of image data;

FIG. 3B is a diagram showing an image of the mist component H(x, y) ;

FIG. 4A is a diagram showing a certain local region R set in input image data I;

FIG. 4B is a diagram showing the local region R to be set in an image Ha of the mist component H(x, y);

FIG. 5 is graph showing a Gaussian function to obtain a count value when a luminance histogram based on the mist component H(x, y) is generated;

FIG. 6 is a graph showing the luminance histogram of the mist component H(x, y);

FIG. 7A is a graph showing an effective luminance range E1 of the histogram before histogram stretching;

FIG. 7B is a graph showing a linear relation at the time of the histogram stretching;

FIG. 7C is a graph showing an effective luminance range E2 of the histogram after the histogram stretching;

FIG. 8 is a graph showing a cumulative histogram to enable histogram equalization;

FIG. 9 is a diagram showing a photographing operation flowchart;

FIG. 10 is a diagram showing a mist correction flowchart;

FIG. 11 is a diagram showing one example of an contrast-corrected image (corrected image); and

FIG. 12 is a configuration diagram showing a mist correction unit in a second embodiment of an imaging apparatus comprising an image processing apparatus according to the present invention.

Description of Embodiments

[First Embodiment]

A first embodiment of the present invention is described below with reference to the drawings.

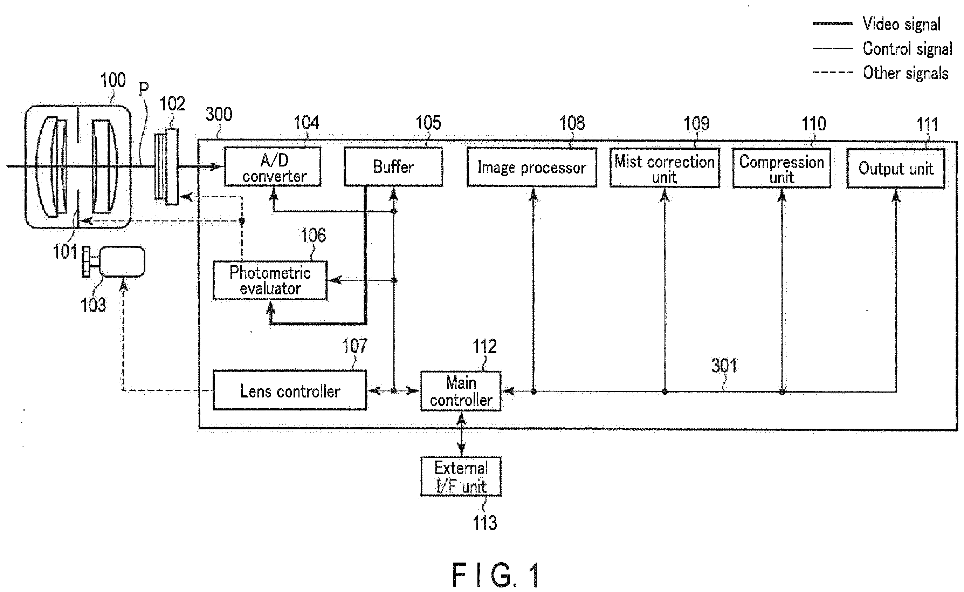

FIG. 1 shows a block configuration diagram of an imaging apparatus to which an image processing apparatus is applied. A lens system 100 forms an optical image from a subject, and includes a focus lens, an aperture 101, and others. This lens system 100 comprises an auto focus motor (AF motor) 103. In response to the driving of the auto focus motor 103, the focus lens moves along an optical axis P. The auto focus motor 103 is driven and controlled by a lens controller 107.

An image pickup sensor 102 is provided on an optical axis of the lens system 100. The image pickup sensor 102 receives the optical image from the lens system 100, and outputs an analog video signal of RGB. An A/D converter 104 inside a camera main body 300 is connected to an output end of the image pickup sensor 102. The A/D converter 104 converts the analog video signal output from the image pickup sensor 102 into a digital video signal.

Furthermore, a main controller 112 comprising a microcomputer or the like is mounted in the camera main body 300. Connected to this main controller 112 via a bus 301 are the A/D converter 104, a buffer 105, a photometric evaluator 106, the lens controller 107, an image processor 108, a mist correction unit 109, a compression unit 110, and an output unit 111. This main controller 112 controls the photometric evaluator 106, the lens controller 107, the image processor 108, the mist correction unit 109, the compression unit 110, and the output unit 111 via the bus 301.

The buffer 105 temporarily saves therein the digital video signal transferred from the A/D converter 104.

The photometric evaluator 106 performs photometry and evaluation of the optical image which enters the image pickup sensor 102 from the digital video signal saved in the buffer 105, controls the aperture 101 of the lens system 100 on the basis of the photometric evaluation and a control signal from the main controller 112, and adjusts an output level or the like of the analog video signal output from the image pickup sensor 102.

The image processor 108 performs image processing such as known interpolation processing, white balance correction processing, and noise reduction processing on the digital video signal saved in the buffer 105, and outputs a digital video signal after this image processing as image data.

The mist correction unit 109 performs a contrast correction to a region in which contrast has been lowered due to, e.g., an influence of mist in the image data transferred from the image processor 108. Details of the mist correction unit 109 will be described later.

The compression unit 110 performs known compression processing such as JPEG or MPEG compression processing on the image data transferred from the mist correction unit 109.

The output unit 111 displays and outputs a video image in a non-illustrated display unit on the basis of the image data which has been subjected to the contrast correction by the mist correction unit 109, or records and outputs the image data compressed in the compression unit 110 to a non-illustrated storage medium (e.g., a memory card).

Furthermore, an external I/F unit 113 is connected to the main controller 112. This external I/F unit 113 is an interface which performs, e.g., switching of a power supply switch, a shutter button, or various modes at the time of photographing.

It is to be noted that the A/D converter 104, the buffer 105, the photometric evaluator 106, the lens controller 107, the image processor 108, the mist correction unit 109, the compression unit 110, and the output unit 111 are connected to the main controller 112 via the bus 301 in FIG. 1, but the present invention is not restricted thereto. For example, the A/D converter 104, the photometric evaluator 106, the lens controller 107, the image processor 108, the mist correction unit 109, the compression unit 110, and the output unit 111 may be connected in series. In this case, the digital video signal output from the A/D converter 104 is transferred to the photometric evaluator 106, the lens controller 107, the image processor 108, the mist correction unit 109, the compression unit 110, and the output unit 111 from the buffer 105 in this order.

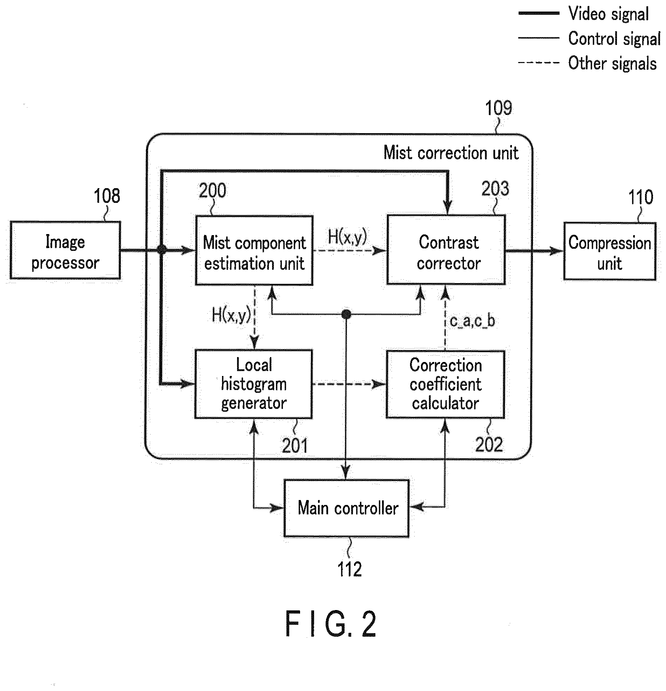

Next, the mist correction unit 109 is described. FIG. 2 shows a specific block configuration diagram of the mist correction unit 109. In this diagram, thick solid-line arrows indicate flows of the digital video signal, thin solid-line arrows indicate flows of the control signal, and broken-line arrows indicate flows of other signals.

The mist correction unit 109 executes an image processing program stored in a non-illustrated program memory under the control of the main controller 112, and thereby has functions of a mist component estimation unit (deterioration degree detector) 200, a local histogram generator (deterioration degree change determination unit) 201, a correction coefficient calculator (correction value setting unit) 202, and a contrast corrector (correction processor) 203.

To explain specifically, the mist component estimation unit 200 detects a deterioration degree for each pixel of the image data acquired from the digital video signal transferred from the image processor 108. Here, the deterioration degree is the degree of presence of factors that deteriorate image quality such as contrast or colors in the image data. One factor that deteriorates the image quality is, for example, a mist component which is contained in the image data when a misty scene is photographed. The explanation is continued below on the assumption that the deterioration degree is the degree of presence of the mist component.

The mist component is estimated on the basis of characteristics that the mist has a high luminance and a low saturation (high-luminance white), namely, a low contrast or a low color reproduction. That is, a pixel which is high in the degree of low contrast and low color reproduction is estimated as the mist component.

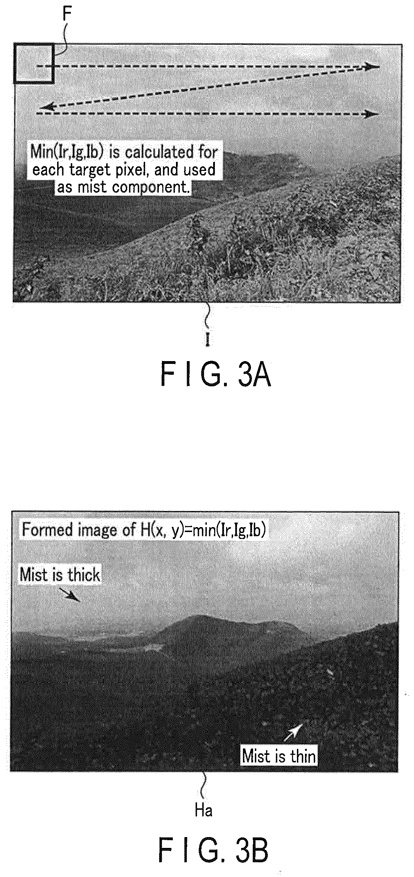

FIG. 3A shows a schematic diagram illustrating a technique to estimate a mist component $H(x, y)$ from input image data I, and FIG. 3B shows image data Ha for the mist component $H(x, y)$.

The mist component estimation unit 200 estimates the mist component $H(x, y)$ on the basis of an R value, a G value, and a B value of a pixel located at coordinates $(x, y)$ in the input image data I transferred from the image processor 108.

Here, the mist component $H(x, y)$ of the image located at the coordinates $(x, y)$ is estimated by Expression (1) below:

$$H(x, y) = \min(Ir, Ig, Ib) \quad ...(1)$$

wherein Ir, Ig, and Ib are the R value, the G value, and the B value at the coordinates $(x, y)$, respectively.

The mist component estimation unit 200 performs the computation of Expression (1) for the whole input image data I. A specific explanation is given below. The mist component estimation unit 200 sets, for example, a scan region (small region) F of a predetermined size in the input image data I. The size of the scan region F is, for example, a predetermined size of m×n (m and n are natural numbers) pixels. Hereinafter, the pixel in the center of the scan region F is a reference pixel. Moreover, each of the pixels around the reference pixel in the scan region F is a neighboring pixel. The scan region F is formed into a size of, for example, 5×5 pixels. The scan region F may be one pixel.

The mist component estimation unit 200 calculates (Ir,Ig,Ib) of each pixel in the scan region F while shifting the position of the scan region F as shown in FIG. 3A, and chooses the minimum value of the calculated values as the mist component $H(x, y)$ of the reference pixel.

Regarding the pixel values of the high-luminance and low-saturation region in the image data I, the R value, the G value, and the B value are equal and high, so that the value of min(Ir,Ig,Ib) is higher. That is, the mist component $H(x, y)$ has a high value in the high-luminance and low-saturation region.

In contrast, regarding the pixel values of the low-luminance or high-saturation region, one of the R value, the G value, and the B value is low, so that the value of min (Ir, Ig, Ib) is lower. That is, the mist component $H(x, y)$ has a low value in the low-luminance and high-saturation region.

Hence, the mist component $H(x, y)$ is characterized in that it has a higher value when the density of mist in a scene is higher (when the white of mist is thicker) and it has a lower value when the density of mist is lower (when the white of mist is thinner).

Here, the mist component is not limited to the calculation by Expression (1). That is, any index that shows the degree of high-luminance and low-saturation can be used as a mist component. For example, a local contrast value, edge strength, a subject distance, or the like can also be used as the mist component.

The local histogram generator 201 determines the degree of a change of the mist component $H(x, y)$ in a local region including the reference pixel of the input image data I and the neighboring pixel therearound on the basis of the mist component $H(x, y)$ transferred from the mist component estimation unit 200. This degree of the change of the mist component $H(x, y)$ is determined on the basis of a distribution of the mist components $H(x, y)$ in the local region, specifically, the difference of the mist components $H(x, y)$ between the reference pixel and the neighboring pixel in the local region.

That is, the local histogram generator 201 generates, for each reference pixel, a luminance histogram for the local region including the neighboring pixel on the basis of the video signal transferred from the image processor 108 and the mist component transferred from the mist component estimation unit 200. General histogram generation is performed by considering a pixel value in a target local region as a luminance value and counting the frequency of the pixel value one by one. On the other hand, in the present embodiment, a count value for a pixel value of a neighboring pixel is weighted in accordance with the values of the mist components of the reference pixel and the neighboring pixel in the local region. The count value for the pixel value of the neighboring pixel takes a value falling in the range of, e.g., 0.0 to 1.0. Moreover, the count value is set to a lower value when the difference of the mist components between the reference pixel and the neighboring pixel is greater, and the count value is set to a higher value when the difference of the mist components between the reference pixel and the neighboring pixel is smaller.

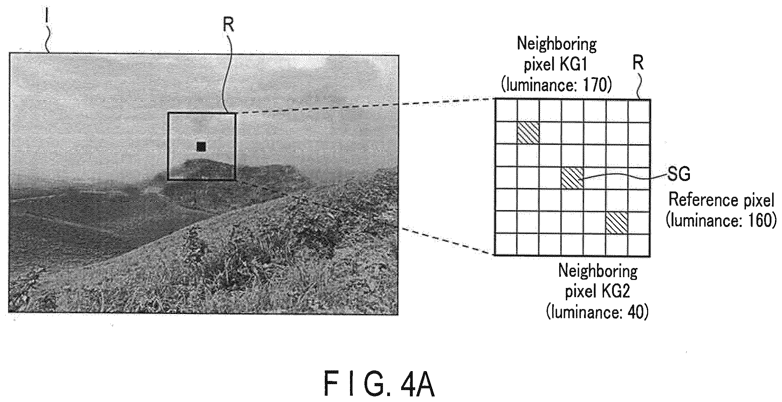

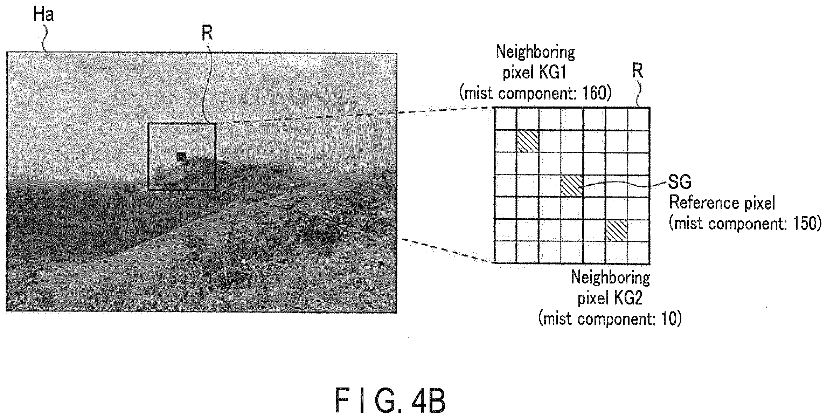

A technique to generate a luminance histogram will now be specifically described. FIG. 4A shows a certain local region R which is set in the image data I. FIG. 4B shows the same local region R as that in the image data I which is set in image data Ha for the mist component H(x, y) . The local region R is formed into a size of, for example, 7×7 pixels.

In the local region R in the image data I shown in FIG. 4A, a reference pixel SG and two neighboring pixels KG1 and KG2 are shown. The reference pixel SG has, for example, a luminance (pixel value) "160". The neighboring pixel KG1 has, for example, a luminance (pixel value) "170", and the neighboring pixel KG2 has, for example, a luminance (pixel value) "40". In this case, in the general histogram generation, the luminance "160" is one count, the luminance "170" is one count, and the luminance "40" is one count. When a histogram is generated by luminance alone, high-luminance and high-saturation pixels are also counted in the same manner as high-luminance and low-saturation pixels.

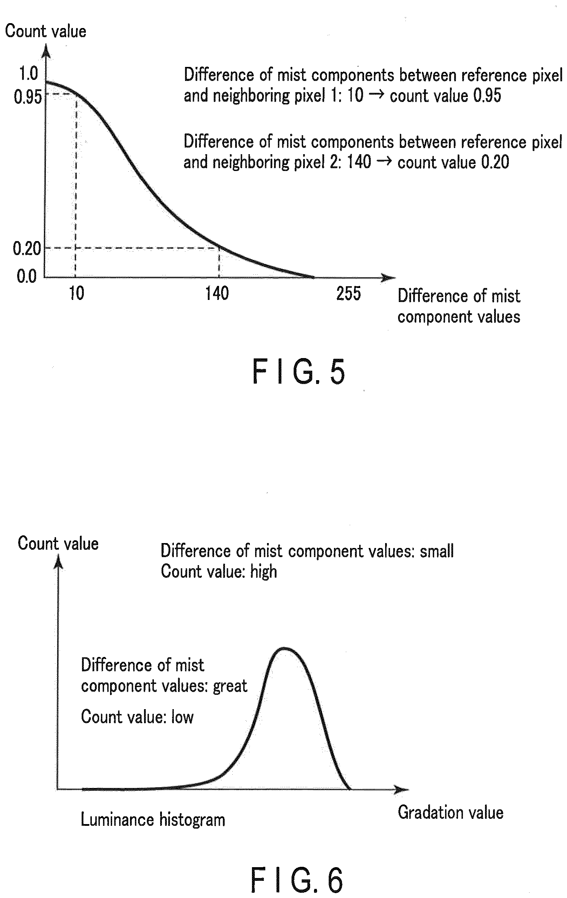

In the local region R in the image data Ha of the mist component H (x, y) shown in FIG. 4B, the reference pixel SG has, for example, a mist component "150", the neighboring pixel KG1 has, for example, a mist component "160", and the neighboring pixel KG2 has, for example, a mist component "10". In the generation of the luminance histogram according to the present embodiment, a count value for the pixel value of each pixel in the local region R in the input image data I is set in accordance with the difference of the mist components H(x, y) between the reference pixel and each neighboring pixel in the local region R in the image data Ha for the mist component H(x, y). A count value which is lower when the difference of the mist components between the reference pixel and the neighboring pixel is greater and which is higher when the difference of the mist components between the reference pixel and the neighboring pixel is smaller is calculated by use of, for example, a Gaussian function shown in FIG. 5. In the Gaussian function in FIG. 5, for example, the count value of the neighboring pixel KG1 in which the difference of the mist components H (x, y) is 10 is 0.95. Further, the count value of the neighboring pixel KG2 in which the difference of the mist components H(x, y) is 140 is 0.20. Therefore, the luminance "170" is 0.95 counts, and the luminance "40" is 0.20 counts. An example of a histogram generated as above is shown in FIG. 6. This histogram is a luminance histogram in the local region R to which the reference pixel SG belongs. As a result, a correction coefficient calculated by the correction coefficient calculator 202 which will be described later can be calculated at an optimum value.

It is to be noted that the count value does not have to be necessarily calculated by the Gaussian function. The count value has only to be decided in accordance with a relation in which the count value is lower when the difference of the mist components H(x, y) between the reference pixel and the neighboring pixel is greater. For example, a lookup table or a polygonal-line-approximated table may be used.

Alternatively, the difference of the value of each of the mist components H(x, y) between the reference pixel and the neighboring pixel may be compared with a predetermined threshold, and on the basis of the result of this comparison, the neighboring pixel targeted for counting may be sorted out and selected. For example, the neighboring pixel in which the difference of the mist components is greater than the predetermined threshold may be untargeted for counting.

Furthermore, the degree of the change of the mist component H(x, y) can be calculated by not only a difference but also a ratio. For example, when a mist component H1 of the reference pixel is equal to 140 and a mist component H2 of the neighboring pixel is equal to 70, the ratio of the mist components is H2/H1=70/140=0.5. Thus, if a greater one of H1 and H2 is used as a denominator, the value of the ratio takes a value of 0.0 to 1.0. The value of the ratio is closer to 1.0 when the difference between H1 and H2 is smaller, and the value of the ratio is closer to 0.0 when the difference between H1 and H2 is greater. In this way, the value of the ratio of the mist components can be treated in the same manner as the difference of the mist components.

The correction coefficient calculator 202 sets a correction coefficient as a correction value to correct the deterioration of the reference pixel SG of the image data I on the basis of the luminance histogram generated by the local histogram generator 201. This correction coefficient is intended to correct, for example, the contrast of the reference pixel. The correction coefficient calculator 202 then transfers the correction coefficients to the contrast corrector 203.

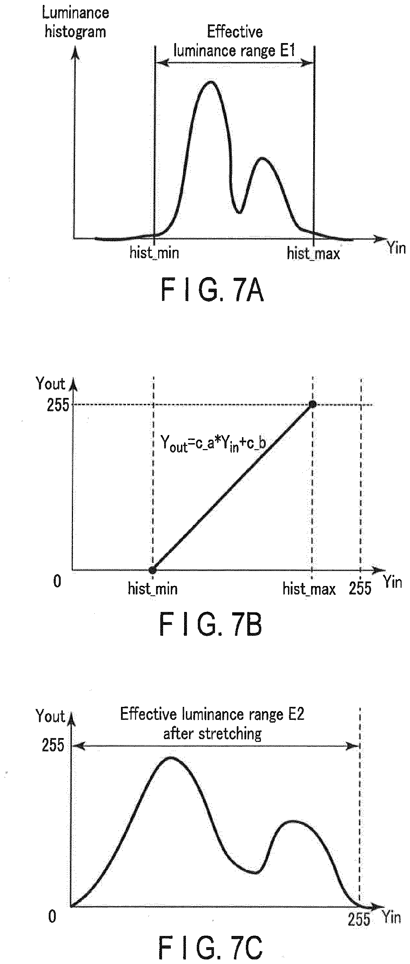

In the present embodiment, histogram stretching is described as a contrast correction technique by way of example. FIG. 7A to FIG. 7C show graphs to illustrate the histogram stretching. The histogram stretching is processing to enhance contrast, for example, by extending an effective luminance range E1 of the luminance histogram shown in FIG. 7A to an effective luminance range E2 of the luminance histogram shown in FIG. 7C.

For example, the histogram stretching is performed by a linear transformation shown in FIG. 7B in which a minimum luminance hist_min and a maximum luminance hist_max in the effective luminance range E1 of the histogram shown in FIG. 7A are extended to a minimum value 0 and a maximum value 255 (in the case of 8 bits) that can be taken by luminance data shown in FIG. 7C. This histogram stretching is represented by Expression (2) below:

$$c\_a = 255/(hist\_max - hist\_min)$$

$$c\_b = -c\_a \times hist\_min \quad ...(2)$$

wherein c_a and c_b represent correction coefficients for contrast correction, hist_min represents the minimum luminance in the effective luminance range of the histogram, and hist_max represents the maximum luminance in the effective luminance range of the histogram. The correction coefficients c_a and c_b are calculated so that the minimum luminance hist_min is 0 and the maximum luminance hist_max is 255. These correction coefficients c_a and c_b are used to perform a linear transformation represented by Expression (3) below:

$$Yout = c\_a \times Yin + c\_b \quad ...(3)$$

wherein Yin is a luminance value (pixel value) of the input image data I before the histogram stretching, and Yout is a luminance value (pixel value) of the input image data I after the histogram stretching.

The minimum luminance hist_min and the maximum luminance hist_max can be each calculated, for example, by the comparison of a cumulative count value of the luminance histogram with a predetermined threshold. It is possible to eliminate the influence of a pixel value having a low frequency value, for example, noise by setting the predetermined threshold.

It is to be noted that in Expression (2), the correction coefficients c_a and c_b are calculated so that the minimum luminance hist_min is 0 and the maximum luminance hist_max is 255. However, the output value 0 corresponding to the minimum luminance hist_min and the output value 255 corresponding to the maximum luminance hist_max may be set to any values, respectively.

Furthermore, the minimum luminance hist_min and the maximum luminance hist_max may be decided in accordance with the value of the mist component of the reference pixel. For example, when the value of the mist component is high, the output value corresponding to the minimum luminance hist_min may be set at 0, and the output value corresponding to the maximum luminance hist_max may be set at 255. When the value of the mist component is low, the output value corresponding to the minimum luminance hist_min may be set at 20, and the output value corresponding to the maximum luminance hist_max may be set at 235.

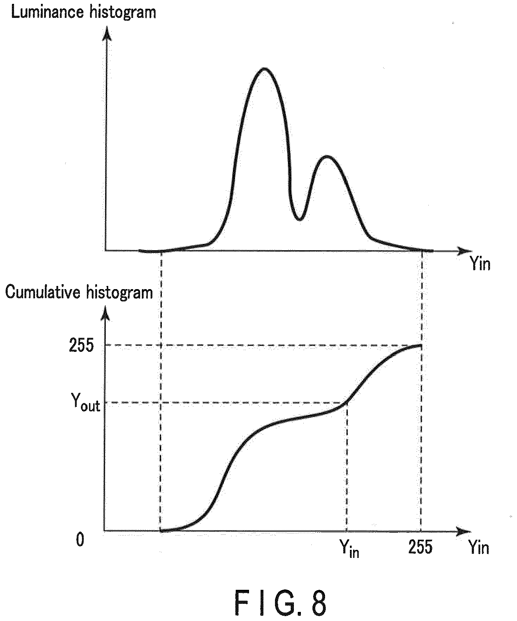

Moreover, in the present embodiment, the histogram stretching is used as a means of enabling contrast correction. On the contrary, it is also possible to apply, for example, histogram equalization as a means of contrast correction. For example, it is also possible to apply a method that uses a cumulative histogram shown in FIG. 8 or a polygonal-line-approximated table, as a method of enabling the histogram equalization. The cumulative histogram is a sequential cumulation of the frequency values of the luminance histogram.

The contrast corrector 203 performs a contrast correction of a reference pixel SG1 of the image data I for the digital video signal transferred from the image processor 108 on the basis of the mist component H(x, y) transferred from the mist component estimation unit 200 and the correction coefficients c_a and c_b transferred from the correction coefficient calculator 202. A computing expression of the contrast correction of luminance data is represented by Expression (4) below:

$$Yout = (1.0 - w) \times Yin + w \times Yt$$

$$Yt = c\_a \times Yin + c\_b \quad ...(4)$$

wherein Yin represents luminance data of the input image data I before the contrast correction, and Yout represents luminance data of the input image data I after the contrast correction. Further, w is a weighting factor in which the value of the mist component H(x, y) is normalized to a value of 0.0 to 1.0. This weighting factor w is higher in value when the value of the mist component H(x, y) is higher. Yt is target luminance data calculated by use of the correction coefficients c_a and c_b transferred from the correction coefficient calculator 202.

As represented by Expression (4), the luminance data Yout after the contrast correction is a value in which the luminance data Yin of the input image data I and the target luminance data Yt are synthesized in accordance with the weighting factor w. According to Expression (4), it is possible to only apply a contrast correction to a region in which the value of the mist component H(x, y) is high.

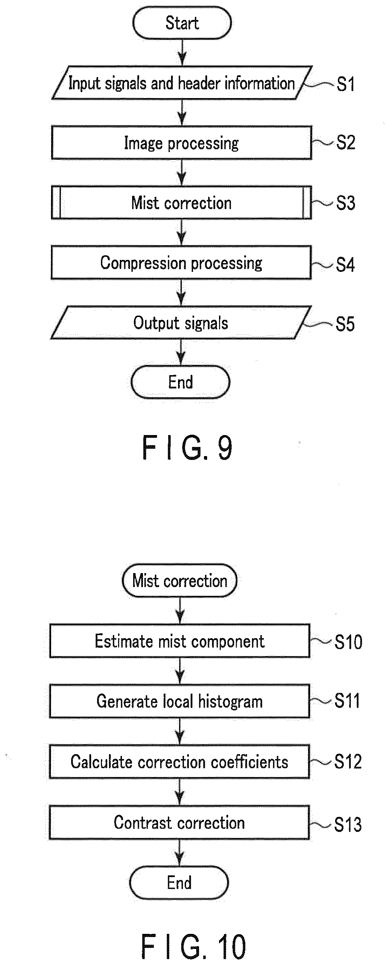

Next, a photographing operation using the apparatus having the above configuration is described with reference to a photographing operation flowchart shown in FIG. 9.

When an operation is performed on the external I/F unit 113, the external I/F unit 113 sends operationally input various settings regarding photography, such as various signals and header information to the main controller 112, in step S1. Moreover, when a record button of the external I/F unit 113 is pressed, the main controller 112 switches to a photography mode. In the photography mode, when an optical image from the lens system 100 enters the image pickup sensor 102, the image pickup sensor 102 receives the optical image from the lens system 100, and outputs an analog video signal. This analog video signal is converted into a digital video signal by the A/D converter 104, and transferred to and then temporarily saved in the buffer 105.

In step S2, the image processor 108 performs image processing such as known interpolation processing, white balance correction processing, and noise reduction processing on the digital video signal saved in the buffer 105, and transfers a digital video signal after this image processing to the mist correction unit 109.

In step S3, the mist correction unit 109 performs a contrast correction to a region in which contrast has been lowered due to the influence of, for example, mist in the digital video signal transferred from the image processor 108, in accordance with a mist correction flowchart shown in FIG. 10.

Specifically, in step S10, the mist component estimation unit 200 estimates the value of a mist component $H(x, y)$ of each pixel of the input image data I transferred from the image processor 108. The mist component estimation unit 200 then transfers the estimated mist component $H(x, y)$ to the local histogram generator 201 and the contrast corrector 203.

In step S11, the local histogram generator 201 generates a luminance histogram for each local region R of the input image data I to determine the degree of a change of the mist component $H(x, y)$, on the basis of the image data I input from the image processor 108 and the mist component $H(x, y)$ transferred from the mist component estimation unit 200. The local histogram generator 201 then transfers the generated luminance histogram to the correction coefficient calculator 202.

In step S12, the correction coefficient calculator 202 sets correction coefficients c_a and c_b on the basis of the luminance histogram generated by the local histogram generator 201. The correction coefficient calculator 202 then transfers the correction coefficients c_a and c_b to the contrast corrector 203.

In step S13, the contrast corrector 203 corrects the input image data I on the basis of the correction coefficients c_a and c_b transferred from the correction coefficient calculator 202 and the mist component $H(x, y)$ transferred from the mist component estimation unit 200. The contrast corrector 203 then transfers the mist-corrected input image data I to the compression unit 110.

Returning to FIG. 9, the explanation is continued below. After the mist correction, the compression unit 110 performs, in step S4, known compression processing such as JPEG or MPEG compression processing on the contrast-corrected input image data I transferred from the mist correction unit 109, that is, the input image data I in which a correction based on the mist component $H(x, y)$ is performed, and the compression unit 110 then transfers the compressed image data I to the output unit 111.

In step S5, the output unit 111 records the image data I after the compression processing transferred from the compression unit 110 in a memory card or the like. Alternatively, an image based on the image data I corrected in the mist correction unit 109 is separately displayed on the display.

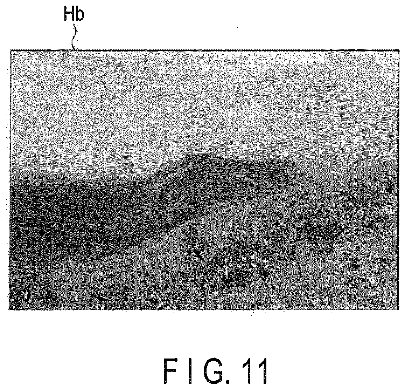

FIG. 11 shows one example of contrast-corrected image (corrected image) data Hb. This image Hb is an appropriately contrast-corrected image even if both a misty region and a non-misty region are mixed in the input image data I. No luminance unevenness has occurred in this image Hb.

Thus, according to the above first embodiment, in the mist correction unit 109, the mist component estimation unit 200 detects a mist component $H(x, y)$ for each pixel of input image data I, the local histogram generator 201 generates, on the basis of the mist component $H(x, y)$, a luminance histogram corresponding to the difference of the mist components $H(x, y)$ to determine the degree of a change of the mist component $H(x, y)$ in a local region R in the input image data I, the correction coefficient calculator 202 sets correction coefficients c_a and c_b on the basis of the luminance histogram, and the contrast corrector 203 corrects the input image data I on the basis of the correction coefficients c_a and c_b. That is, at the time of a contrast correction, it is possible to perform a suitable contrast correction for each local region R by generating a luminance histogram in the local region R only using the neighboring pixel having a value of the mist component equal to that of a reference pixel even if both a misty region and a non-misty region are mixed in the input image data I. Moreover, there are no reduction in the effect of the contrast correction and no occurrence of luminance unevenness at the boundary between the misty region and the non-misty region.

Hence, it is possible to perform a suitable contrast correction in accordance with the density of the mist component $H(x, y)$ for each region in the input image data I. As a result, a high-quality image improved in visibility can be obtained. Moreover, it is possible to not only record an image improved in visibility but also obtain the effect of improving contrast in an image. For example, if the mist correction is applied to pre-processing of contrast AF or recognition processing of a subject, it is possible to contribute to an improvement in the performance of the contrast AF or the recognition processing of the subject.

[Second Embodiment]

Next, a second embodiment of the present invention is described with reference to the drawings. It is to be noted that the same parts as those in FIG. 1 and FIG. 2 are not described, and different parts are only described.

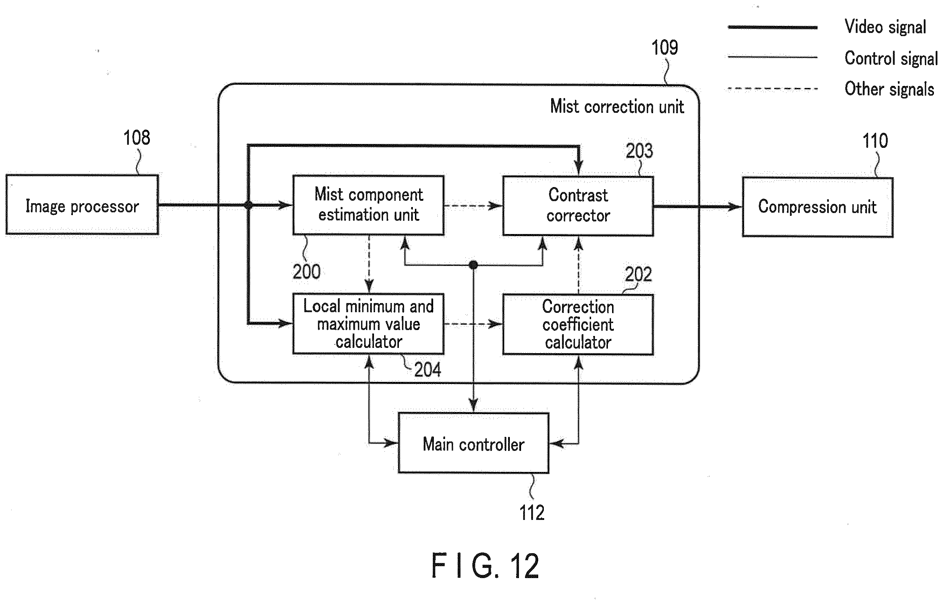

FIG. 12 shows a configuration diagram of the mist correction unit 109. This mist correction unit 109 is provided with a local minimum and maximum value calculator 204 as a deterioration degree change determination unit instead of the local histogram generator 201 shown in FIG. 2.

Transferred to the local minimum and maximum value calculator 204 are the input image data I from the image processor 108, and the mist component H(x, y) from the mist component estimation unit 200. The local minimum and maximum value calculator 204 scans the input image data I for luminance (pixel value) for each local region R, and detects a minimum luminance and a maximum luminance.

When detecting the minimum luminance and the maximum luminance, the local minimum and maximum value calculator 204 previously excludes, from the scanning target, the neighboring pixels which are greatly different in the value of the mist component H(x, y) from the reference pixel SG in the image data Ha for the mist component H(x, y) so that the minimum luminance and the maximum luminance can be detected from the region to which the reference pixel SG belongs. This local minimum and maximum value calculator 204 transfers the minimum luminance and the maximum luminance to the correction coefficient calculator 202.

It is to be noted that the local minimum and maximum value calculator 204 does not exclusively exclude the neighboring pixels which are greatly different in the value of the mist component H(x, y) from the scanning target. For example, the local minimum and maximum value calculator 204 may detect the minimum luminance and the maximum luminance from the pixel value after filtered by a weighted average filter in which the pixel value of the reference pixel SG is used as a reference.

The correction coefficient calculator 202 calculates a correction coefficient on the basis of the minimum luminance and the maximum luminance transferred from the local minimum and maximum value calculator 204. The correction coefficient calculator 202 then transfers this correction coefficient to the contrast corrector 203.

Although the correction coefficients are calculated for all the pixels in the input image data I in the present embodiment, the present invention is not restricted thereto. For example, the input image data I to the image processor 108 may be reduced, and then a correction coefficient may be calculated from the resized (reduced) image. In this case, it is only necessary to decide correction coefficients for all the pixels in the reduced image, and then calculate a correction coefficient for each pixel in the input image data I by interpolation processing. It is possible to expect the effects of reducing a processing load and avoiding the influence of noise by the reduction.

Furthermore, the mist correction unit 109 may generate a reduced image of the input image data I, and detect a deterioration degree of the mist component H(x, y) or the like from the reduced image.

Although the thickness of the mist component is referred to as the deterioration degree in the present embodiment, the present invention is not restricted thereto, and is also applicable to the occurrence of the following phenomena: phenomena characterized by high luminance, low saturation, and the reduction of contrast, such as phenomena including a haze component, a fog component, a component to be turbidity, a smoke component, a component produced by backlight, or a component produced by flare. Further, the color does not necessarily need to be white as long as the luminance is high and the saturation is low, and a slight color is also applicable.

**Claims**

1.  An image processing apparatus comprising:

    a deterioration degree detector which detects a deterioration degree of each pixel of image data;
    a deterioration degree change determination unit which determines a degree of a change of the deterioration degree in a predetermined region including a reference pixel and a neighboring pixel therearound in the image data on the basis of the deterioration degree;
    a correction value setting unit which sets a correction value to correct a deterioration of the reference pixel on the basis of the degree of the change of the deterioration degree; and
    a correction processor which corrects data regarding the reference pixel on the basis of at least the correction value.

2.  The image processing apparatus according to claim 1, wherein the correction processor corrects the data regarding the reference pixel on the basis of the correction value and the deterioration degree.

3.  The image processing apparatus according to claim 1, wherein the deterioration degree is a decrease degree of contrast of the image data or a decrease degree of color reproduction of the image data.

4.  The image processing apparatus according to claim 1, wherein the deterioration degree is a degree of high luminance and low saturation of the image data.

5.  The image processing apparatus according to claim 1, wherein the deterioration degree is a contrast value or edge strength of a small region of the image data.

6.  The image processing apparatus according to claim 1, wherein the deterioration degree change determination unit determines the degree of the change of the deterioration degree on the basis of a distribution of the deterioration degree in the predetermined region.

7. The image processing apparatus according to claim 6, wherein the deterioration degree change determination unit determines the degree of the change of the deterioration degree on the basis of a difference of the deterioration degree between the reference pixel and the neighboring pixel.

8. The image processing apparatus according to claim 6, wherein the deterioration degree change determination unit determines the degree of the change of the deterioration degree on the basis of luminance data and saturation data regarding each of the reference pixel and the neighboring pixel.

9. The image processing apparatus according to claim 6, wherein the deterioration degree change determination unit decides an index value from a difference of luminance data between the reference pixel and the neighboring pixel, a difference of saturation data, or both the luminance data and the saturation data, and determines the degree of the change of the deterioration degree on the basis of a difference of the index value.

10. The image processing apparatus according to claim 6, wherein the deterioration degree change determination unit finds, for each predetermined region, a count value corresponding to a difference of the deterioration degree between the reference pixel and the neighboring pixel, and adds up the count value to generate a histogram for the deterioration degree.

11. The image processing apparatus according to claim 10, wherein the count value is a smaller value when the difference of the deterioration degree between the reference pixel and the neighboring pixel is greater.

12. The image processing apparatus according to claim 6, wherein the deterioration degree change determination unit detects a minimum luminance and a maximum luminance for each predetermined region.

13. The image processing apparatus according to claim 1, wherein the deterioration degree change determination unit generates a reduced image from the image data, and detects the deterioration degree from the reduced image.

14. The image processing apparatus according to claim 1, wherein the deterioration degree change determination unit generates a frequency distribution of luminance data in the predetermined region comprising the reference pixel and the neighboring pixel, and the correction processor performs an adjustment of weighting to a frequency value of a pixel value of the neighboring pixel at the time of the generation of the frequency distribution in accordance with the degree of the change of the deterioration degree between the reference pixel and the neighboring pixel.

15. The image processing apparatus according to claim 14, wherein the correction processor decreases the frequency value of the neighboring pixel in which the degree of the change of the deterioration degree between the reference pixel and the neighboring pixel is high.

16. An imaging apparatus comprising:

   the image processing apparatus according to any one of claims 1 to 15; and
   an imaging unit which acquires the image data.

17. An image processing method comprising:

   detecting a deterioration degree of each pixel of image data;
   determining the degree of a change of the deterioration degree in a predetermined region including a reference pixel and a neighboring pixel therearound in the image data on the basis of the deterioration degree;
   setting a correction value to correct the deterioration of the reference pixel on the basis of the degree of the change of the deterioration degree; and
   correcting data regarding the reference pixel on the basis of the correction value.

18. A storage medium storing an image processing program of an image processing apparatus which causes a computer to:

   detect a deterioration degree of each pixel of image data;
   determine the degree of a change of the deterioration degree in a predetermined region including a reference pixel and a neighboring pixel therearound in the image data on the basis of the deterioration degree;
   set a correction value to correct the deterioration of the reference pixel on the basis of the degree of the change of the deterioration degree; and
   correct data regarding the reference pixel on the basis of the correction value.

EP 3 293 697 A1

Video signal
Control signal
Other signals

A/D converter

Buffer

Image processor

Mist correction unit

Compression unit

Output unit

Photometric evaluator

Lens controller

Main controller

External I/F unit

F I G. 1

Video signal
——— Control signal
----- Other signals

109

Mist correction unit

108

Image processor

200

Mist component estimation unit

H(x,y)

203

Contrast corrector

110

Compression unit

H(x,y)

c_a,c_b

Local histogram generator

201

Correction coefficient calculator

202

Main controller

112

FIG. 2

F I G. 3A

F I G. 3B

FIG. 4A

EP 3 293 697 A1

Ha

R

Neighboring pixel KG1 (mist component: 160)

SG

Reference pixel (mist component: 150)

Neighboring pixel KG2 (mist component: 10)

R

F I G. 4B

FIG. 5

FIG. 6

Luminance
histogram

Effective
luminance range E1

hist_min       hist_max    Yin

# FIG. 7A

Yout

255

$Y_{out}=c\_a*Y_{in}+c\_b$

0     hist_min        hist_max   255   Yin

# FIG. 7B

Yout    Effective luminance range E2
after stretching

255

0                           255   Yin

# FIG. 7C

FIG. 8

Start

Input signals and header information —— S1

Image processing —— S2

Mist correction —— S3

Compression processing —— S4

Output signals —— S5

End

# F I G. 9

Mist correction

Estimate mist component —— S10

Generate local histogram —— S11

Calculate correction coefficients —— S12

Contrast correction —— S13

End

# F I G. 10

Hb

F I G. 11

F I G. 12

## INTERNATIONAL SEARCH REPORT

| International application No. |
| --- |
| PCT/JP2016/051028 |

**A. CLASSIFICATION OF SUBJECT MATTER**
*G06T5/00(2006.01)i, H04N1/407(2006.01)i, H04N5/232(2006.01)i*

According to International Patent Classification (IPC) or to both national classification and IPC

**B. FIELDS SEARCHED**

Minimum documentation searched (classification system followed by classification symbols)
G06T5/00, H04N1/407, H04N5/232

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br><br>A | JP 2012-027547 A  (Mitsubishi Electric Corp.),<br>09 February 2012 (09.02.2012),<br>paragraphs [0001], [0011] to [0018]; fig. 1<br>(Family: none) | 1-2,6-7,<br>12-13,16-18<br>3-5,8-11,<br>14-15 |
| Y | JP 2008-042874 A  (Eastman Kodak Co., Nittoh<br>Kogaku Kabushiki Kaisha),<br>21 February 2008 (21.02.2008),<br>paragraphs [0037], [0041], [0048]<br>& US 2008/0013850 A1<br>paragraphs [0081], [0085], [0092] | 1-2,6-7,<br>12-13,16-18 |
| Y | JP 2013-228798 A  (Olympus Corp.),<br>07 November 2013 (07.11.2013),<br>paragraphs [0073] to [0075]<br>(Family: none) | 12,16 |

☒  Further documents are listed in the continuation of Box C.     ☐  See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    07 April 2016 (07.04.16) | Date of mailing of the international search report<br>    19 April 2016 (19.04.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**INTERNATIONAL SEARCH REPORT**

| International application No. |
|---|
| PCT/JP2016/051028 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-109373 A  (Casio Computer Co., Ltd.), 02 June 2011 (02.06.2011), paragraph [0024] & US 2011/0115898 A1 paragraph [0038] & CN 102065310 A | 13,16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4982475 B